# EUROPÄISCHE PATENTSCHRIFT

(11) **EP 4 089 063 B1**
(45) Veröffentlichungstag und Bekanntmachung des Hinweises auf die Patenterteilung: **13.12.2023**
(21) Anmeldenummer: 22168163.8
(22) Anmeldetag: 13.04.2022
(51) Int. Cl.: C04B 28/02, C04B 28/14, C04B 28/16

(54) **VERFAHREN ZUM BEREITSTELLEN EINER VORGEFERTIGTEN TROCKENMISCHUNG ZUM HERSTELLEN VON HOLZBETON**
METHOD FOR PROVIDING A PREFABRICATED DRY MIX FOR PRODUCING WOOD CONCRETE
PROCÉDÉ DE FOURNITURE D'UN MÉLANGE SEC PRÉFABRIQUÉ PERMETTANT DE FABRIQUER LE BOIS-BÉTON

(30) Priorität: 22.04.2021 AT 503012021
(43) Veröffentlichungstag der Anmeldung: 16.11.2022
(73) Patentinhaber: EPS Leichtbeton GmbH, 9560 Feldkirchen (AT)
(72) Erfinder: Ganzi, Gerald, 9064 Magdalensberg (AT); Huber, Martin, 9570 Ossiach (AT)
(74) Vertreter: Hübscher & Partner Patentanwälte GmbH

(56) Entgegenhaltungen:
- EP-A1- 2 177 489
- CA-A1- 2 108 042
- DE-A1-102008 043 988
- DE-C- 847 724
- DE-C1- 10 046 387
- RU-C1- 2 605 110
- US-A- 6 001 169
- US-A1- 2018 312 440

## Beschreibung

Die Erfindung bezieht sich auf ein Verfahren zum Bereitstellen einer vorgefertigten Trockenmischung zum Herstellen von Holzbeton mit einem hydraulischen Bindemittel und Holzgranulat als Zuschlagstoff.

Leichtbetone aus einem hydraulischen Bindemittel, vorzugsweise Zement, und einem Holzgranulat, insbesondere Holzspänen, sind bekannt. Der hölzerne Zuschlagstoff dieser Holzbetone macht jedoch aufgrund seiner vom Feuchtigkeitsgehalt abhängigen Quellung und seiner Witterungsanfälligkeit Schwierigkeiten, und zwar sowohl bei seiner Lagerung als auch in der ausgehärteten Bindemittelmatrix. Um diesen Schwierigkeiten zu begegnen, wurde bereits vorgeschlagen (DE 10 2010 051 059 A1), den Zuschlagstoff aus Holzspänen mit einer Ummantelung aus einem mineralischen Bindemittel, beispielsweise Zement, herzustellen, indem die Holzspäne mit dem mineralischen Bindemittel und weiteren feinen Mineralpartikeln unter Zugabe von Wasser gemischt und ummantelt wird. Die ummantelten Holzspäne werden nach einem Aushärten des mineralischen Bindemittels zur Lagerung zu einem Haufwerk aufgeschüttet, um im Bedarfsfall als Zuschlagstoff verfügbar zu sein.

Für einen ähnlichen Zweck wird nach der WO 99/32416 A1 Holzgranulat mit Wasser vermischt, dem ein Weichmacher zugesetzt wurde. Nach dem Zumischen von Zement wird Wasser hinzugefügt, bis eine nicht pastöse Mischung erhalten wird, die anschließend getrocknet wird. Es ist auch bekannt (DE 100 46 387 C1), den in einer Menge von 30 bis 70 Gew.% eingesetzten, abgesiebten, kleinstückigen und/oder feinteiligen Zuschlagstoff in Form von Holzschnitzel, Hobel- und Sägespänen oder Sägemehl aus afrikanischen Holzarten mit Wasser unter Zusatz von Tensiden vorzubehandeln, um die Feuchtigkeitsaufnahme für den folgenden Mischvorgang zu verbessern. Darüber hinaus ist es bekannt, das für die Herstellung von Holzbeton eingesetzte Holzgranulat mit Wärme (RU 2018143612 A) oder mit Wasser (JP H08104555 A) vorzubehandeln.

EP2177489 A offenbart eine verpackte lagerfähige Fertigzusammensetzung enthaltend pflanzlichen Zuschlag wie z.B. Nadelholz , Zement und Mineralisator.

CA2108042 A offenbart eine Trockenmischung enthaltend frische Sägespäne, Zement und Kalk.

Nachteilig bei dieser Aufbereitung der Zuschlagstoffe auf Holzbasis ist einerseits der damit verbundene Aufwand und anderseits, dass die Holzeigenschaften zum Teil verloren gehen. Außerdem müssen diese hölzernen Zuschlagstoffe zur Herstellung von Holzbeton vor Ort erst mit dem hydraulischen Bindemittel und Anmachwasser vermischt werden, bevor ein verarbeitbarer Holzbeton zur Verfügung steht.

Der Erfindung liegt somit die Aufgabe zugrunde, ein einfaches Verfahren zur Bereitstellung einer trockenen, lagerbaren Fertigmischung anzugeben, der lediglich Anmachwasser zugefügt werden muss, um einen verarbeitbaren Holzbeton zu erhalten, dessen hölzerner Zuschlagstoff seine Holzeigenschaften weitgehend beibehält, ohne die auf die Wasseraufnahmefähigkeit des Holzwerkstoffs zurückzuführenden Nachteile in Kauf nehmen zu müssen. Ausgehend von einem Verfahren der eingangs geschilderte Art löst die Erfindung die gestellte Aufgabe dadurch, dass das eine Restfeuchte bis zu 40% aufweisende Holzgranulat mit dem hydraulischen Bindemittel in einem dem herzustellenden Holzbeton entsprechenden Mischungsverhältnis gemischt wird, wobei 40 bis 70 Gewichtsteile des Holzgranulats mit sich je auf 100 Gewichtsteile ergänzenden Gewichtsteilen von hydraulischem Bindemittel und allenfalls einem Zusatzmittel für das Bindemittel vermischt werden, und dass dann die Mischung in feuchtigkeitsdichten Verpackungseinheiten gelagert wird. Da das Holzgranulat mit dem hydraulischen Bindemittel in einem für den herzustellenden Holzbeton entsprechenden Mischungsverhältnis ohne Zugabe von Anmachwasser gemischt wird, liegt eine unmittelbar einsetzbare Fertigmischung vor, der lediglich Anmachwasser zur Herstellung des Holzbetons zugeführt werden muss. Die unterschiedliche Feuchtigkeit des eingesetzten Holzgranulats spielt in überraschender Weise für die Eigenschaften des Holzwerkstoffs im ausgehärteten Holzbeton keine Rolle, weil das hydraulische Bindemittel der Fertigmischung Feuchte aus dem Holzwerkstoff bindet, sodass von einer von der Anfangsfeuchte weitgehend unabhängigen, gleichmäßigen Restfeuchte des hölzernen Zuschlagstoffs ausgegangen werden kann. Eine höhere Anfangsfeuchtigkeit führt ja lediglich zu einem etwas höheren Grad der Hydratation des Bindemittels, was jedoch im Hinblick auf die zur vollständigen Hydratation benötigte Wassermenge unberücksichtigt bleiben kann. Zum Unterschied zu den bekannten Ummantelungen bleibt der durch die Feuchtigkeit des Holzgranulats gebundene Bindemittelanteil gering und umschließt die Granulatteilchen nicht vollständig, was dazu führt, dass die Eigenschaften des Holzwerkstoffs kaum beeinträchtigt werden und daher für den Holzbeton vorteilhaft genützt werden können, und zwar bei einer geringen, gleichmäßigen Restfeuchte des Holzwerkstoffs. Aufgrund dieser Umstände kann die erfindungsgemäße Fertigmischung für Holzbeton in feuchtigkeitsdichten Verpackungseinheiten gelagert werden, um dann vor Ort ohne Qualitätseinbußen mit Anmachwasser zu einem Holzbeton verarbeitet zu werden. Der Gewichtsanteil des Holzgranulats an der trockenen Fertigmischung kann 40 bis 70 % ausmachen. Da im Allgemeinen keine weiteren Zuschläge oder Zusatzstoffe benötigt werden, besteht der Rest der trockenen Fertigmischung lediglich aus dem hydraulischen Bindemittel mit allfälligen Zusatzmitteln für das Bindemittel, um Einfluss auf die Eigenschaften des Bindemittels nehmen zu können.

Als Holzgranulat, üblicherweise Holzspäne, können unterschiedliche Holzarten, insbesondere Fichte oder Kiefer, zum Einsatz kommen, wobei sich eine Körnung zwischen 1 und 10 mm als vorteilhaft herausgestellt hat.

Als hydraulische Bindemittel kommen insbesondere Zement, aber auch Gips oder Anhydrit und dgl. In Frage, wobei zur Verbesserung der Eigenschaften dieser Bindemittel in an sich bekannter Weise unterschiedliche Zusatzmittel eingesetzt werden können.

### Ausführungsbeispiel 1:

Es wurden 8 kg eines Holzgranulats aus Fichtenspänen mit einer Körnung von 1 bis 10 mm mit 16 kg Zement und 80 g eines Fließmittels als Zementzusatzmittel gemischt. Die Feuchte der Fichtenspäne betrug im Mittel 25 %. Diese Fertigmischung wurde in einem feuchtigkeitsdichten Sack verpackt und diese Verpackungseinheit 6 Wochen gelagert. Danach wurde aus dem Sackinhalt mit 6,4 I Anmachwasser ein Holzbeton zur Fertigung eines Estrichs hergestellt.

Der sich aufgrund der gewählten Anteile ergebende Wasserzementwert von 0,4 stellt die zur vollständigen Hydratation des Zements benötigte Wassermenge sicher, sodass wegen der raschen Zementbindung das Holzgranulat kaum Anmachwasser aufnehmen kann. Außerdem werden vorteilhafte Voraussetzungen geschaffen, die Begehbarkeit des Estrichs nach 24 h und seine Belegbarkeit nach 48 h zu gewährleisten.

Die Rohdichte des hergestellten Holzbetons betrug ca. 700 kg/m³. Die Druckfestigkeit wurde mit 1 N/mm² gemessen.

### Ausführungsbeispiel 2:

Es wurde eine Trockenmischung aus 8 kg Holzgranulat aus Fichtenspänen mit einer Körnung von 1 bis 10 mm und aus 16 kg Anhydrit hergestellt und in einem feuchtigkeitsdichten Sack verpackt. Nach einer mehrwöchigen Lagerung wurde der Sackinhalt mit 7 I Anmachwasser zu einem Holzbeton gemischt und entsprechend dem Ausführungsbeispiel 1 verarbeitet. Es ergaben sich mit dem Ausführungsbeispiel 1 vergleichbare Ergebnisse.

## Patentansprüche

1. Verfahren zum Bereitstellen einer vorgefertigten Trockenmischung zum Herstellen von Holzbeton mit einem hydraulischen Bindemittel und Holzgranulat als Zuschlagstoff, **dadurch gekennzeichnet, dass** das eine Restfeuchte bis zu 40% aufweisende Holzgranulat mit dem hydraulischen Bindemittel in einem dem herzustellenden Holzbeton entsprechenden Mischungsverhältnis gemischt wird, wobei 40 bis 70 Gewichtsteile des Holzgranulats mit sich je auf 100 Gewichtsteile ergänzenden Gewichtsteilen von hydraulischem Bindemittel und allenfalls einem Zusatzmittel für das Bindemittel vermischt werden, und dass dann die Mischung in feuchtigkeitsdichten Verpackungseinheiten gelagert wird.

2. Verfahren nach Anspruch 1, **dadurch gekennzeichnet, dass** das Holzgranulat eine Korngröße zwischen 1 und 10 mm aufweist.

3. Verfahren nach Anspruch 1 oder 2, **dadurch gekennzeichnet, dass** als hydraulisches Bindemittel Zement eingesetzt wird.

## Claims

1. Method for providing a prefabricated dry mixture for producing wood concrete with a hydraulic binder and wood granulate as aggregate, **characterized in that** the wood granulate having a residual moisture content of up to 40% is mixed with the hydraulic binder in a mixing ratio corresponding to the wood concrete to be produced, wherein 40 to 70 parts by weight of the wood granulate are mixed with parts by weight of hydraulic binder, which add up to 100 parts by weight, and possibly an additive for the binder, and that the mixture is then stored in moisture-tight packaging units.

2. Method according to claim 1, **characterized in that** the wood granulate has a grain size of between 1 and 10 mm.

3. Method according to claim 1 or 2, **characterized in that** cement is used as the hydraulic binder.

## Revendications

1. Procédé de préparation d'un mélange sec préfabriqué pour la fabrication de bois-béton en utilisant un liant hydraulique ainsi que des granulés de bois en tant qu'additif, **caractérisé en ce que** des granulés de bois qui présentent une humidité résiduelle pouvant atteindre 40 % sont mélangés avec le liant hydraulique suivant un rapport de mélange qui correspond au bois-béton à fabriquer, dans lequel de 40 à 70 parties en poids de granulés de bois sont mélangées avec un nombre complémentaire de parties en poids de liant hydraulique pour parvenir à un total 100 parties en poids et optionnellement avec un additif pour le liant, et **en ce que** le mélange est ensuite stocké dans des unités de conditionnement étanches à l'humidité.

2. Procédé selon la revendication 1, **caractérisé en ce que** les granulés de bois présentent une granulométrie qui est comprise entre 1 mm et 10 mm.

3. Procédé selon la revendication 1 ou 2, **caractérisé en ce que** le liant hydraulique utilisé est le ciment.
